# EUROPEAN PATENT SPECIFICATION

(11) **EP 2 534 314 B1**
(45) Date of publication and mention of the grant of the patent: **02.11.2016**
(21) Application number: 10760295.5
(22) Date of filing: 21.09.2010
(51) Int. Cl.: E02D 27/42, F03D 1/00, E02D 27/50, E02D 27/52

(54) **FOUNDATION STRUCTURE FOR WIND TURBINE**
GRÜNDUNG FÜR WINDTURBINE
FONDATION D'UNE AÉOLIÈNNE

(30) Priority: 25.05.2010 EP 10163757
(43) Date of publication of application: 19.12.2012
(73) Proprietor: Siemens Aktiengesellschaft, 80333 München (DE)
(72) Inventor: STIESDAL, Henrik, 5000 Odense C (DK); OESTERGAARD, Thomas, 6000 Kolding (DK)
(86) International application number: PCT/EP2010/063905
(87) International publication number: WO 2011/147476

(56) References cited:
- EP-A2- 2 067 914
- EP-A2- 2 067 915
- GB-A- 2 220 432
- US-A- 4 102 143
- US-A- 4 131 166

## Description

The invention relates to a foundation structure for offshore constructions, in particular a foundation structure for offshore wind turbines, comprising a number of first, second and grounding profiles, whereby the first profiles comprise rods in axial alignment, the second profiles comprise rods in an angled alignment relative to the first profiles and the grounding profiles comprise bush-like members contacting the ground with one axial end, whereby the jacket structure is fixed to the ground by means of grounding piles penetrating through the bush-like member into the ground. Such structure is generally known from US 4 131 166 A1.

Offshore constructions for structures to be installed in the sea are usually necessary in particular for wind power plants, that is wind turbines and represent a constructive challenge as the respective structures have to be erected on the seabed by means of an appropriate foundation. A number of different types of foundations as monopole-, tripile-, or tripod-foundations are known from prior art. Aside, jacket structures are well-known since they are constructively simple and show good mechanical properties.

Thereby, the anchoring of the foundation structures is regularly provided by fixing means such as grounding piles, which are fixed to the ground or seabed respectively with one end, while the other end is fixed to the foundation structure by means of separate connecting means.

EP 2 067 914 A2 discloses a known jacket structure comprising a number of rod-profiles in axial or angled alignment and a number of node-members, whereby a connection of the jacket structure with the seabed is provided by piles extending separately through bush-members which are allocated to respective axial-rod profiles in parallel alignment, whereby a mechanical joint of the bush-members and the rod-profiles is established through horizontally aligned metal plates connected with both the rod-profiles and the bush-members.

EP 2 067 915 A2 relates to an alternative way of connecting a jacket structure to the seabed by means of a special design, whereby pre-installed piles partially engage with their respective free endings into respective connecting portions of node members of the jacket structure. This principle requires a highly precise arrangement of the piles in the seabed as a pre-requisite for the subsequent installation of the jacket structure since the arrangement of the piles must exactly correspond to the arrangement and orientation of the connecting portions of the node members.

Thus, the connecting principles known from prior art are deemed as comparatively cumbersome.

Consequently, it is the object of the present invention to provide a foundation structure having an improved connecting principle for connecting the foundation structure with the ground.

This is achieved by a foundation structure as described above, wherein the bush-like members are coaxially aligned with the first profiles.

Hence, the connecting principle of the foundation structure with the ground or the seabed respectively according to the present invention differs from prior art in that the grounding piles and the bush-like member represent a direct axial elongation of the first profiles of the jacket structure due to their coaxial alignment. In such a manner, the inventive foundation structure may be easily erected as the essentially vertically extending bush-like members built a definite starting point for erecting the foundation structure. A highly precise and hence, complex pre-installation of grounding piles on the seabed is not necessary with the inventive principle. The inventive foundation structure is based on grounding piles penetrating through pre-installed bush-like members in order to provide a safe connection of the foundation structure with the ground. In such a manner, the bush-like members and the grounding piles respectively are originally disposed in a desired relation and/or orientation with respect to the coaxially disposed first profiles of the foundation structure.

In order to increase the strength of the connection between the bush-like members and the grounding piles, the inner diameter of the bush-like members may be at least partially provided with an axially extending connecting portion and the outer diameter of the grounding piles may be at least partially provided with a corresponding connecting portion. The respective connecting portions correspond to each other and provide a firm, preferably non-detachable joint between the bush-like members and the grounding piles. Thereby, the respective connecting portions may be provided at different positions along the axial length of the inner diameter of the bush-like members or the respective outer diameter of the grounding piles. Likewise, the respective connecting portions may extend over the entire axial length of the respective inner diameter of the bush-like members and/or the outer diameter of the grounding piles.

In such a manner, it is possible that the connecting portion provides a snap-fit connection. Snap-fit connections provide a mechanically stable connection of parts to be connected, whereby in dependence of the concrete design of the snap-fit connection the strength of the respective mechanical joint is adjustable. Consequently, the respective connecting portion is either formed as a snap-fit or a corresponding recess. The snap-fit connection allows an insertion of the grounding pile into the bush-like member, that is it allows movements in axial direction towards the ground, yet it restricts any movement in an opposite direction thereto, that is keeps the grounding pile safely accommodated within the bush-like member. The concrete design of the snap-fit and the corresponding recess is not limited.

Additionally or alternatively, the grounding piles may be grouted within the bush-like members. Grout represents a construction or connecting material generally composed of a mixture of water, cement, sand and/or gravel. It is applied in a liquid state and may harden under water. Of course, other materials capable of establishing an enduring connection between the bush-like members and the grounding piles such as water-resistant mortar for instance are applicable as well, so that they might also be used for grouting of the grounding piles. Thereby, the inner diameter of a bush-like member is preferably at least slightly larger than the outer diameter of the grounding pile, so that a space is built between the bush-like member and the grounding pile, that is the bush-like member accommodates the grounding pile with a certain play. After the grounding pile has been properly positioned within the bush-like member, the space is filled with grout or any other respective material. Thereby, the bush-like member may comprise openings in terms of inlets and/or outlets for filling the space between the bush-like member and the grounding pile with grout or a like material.

In a further embodiment of the invention, the grounding piles are connected to at least one adjacently disposed first profile by means of tension wires. In such a manner, an easy connecting-principle of the foundation structure with the grounding piles may be established through wires extending from the free ending of the grounding pile through or into at least one first profile to a connecting-point, where the respective end of the tension wire is firmly fixed. Thereby, it is possible that the tension wire axially extends through a number of adjacently disposed first profiles, so that a number of respective first profiles may be connected with each other by only one tension wire. The tension wire is built of a mechanically stable material which preferably comprises anti-corrosive properties.

It is possible, that the foundation structure further comprises at least one node member, wherein the node member is disposed between adjacently disposed first profiles or between adjacently disposed first profiles and bush-like members. The node member mainly provides a connecting-site for both second and first profiles. The arrangement of a node member may be between first profiles or between first profiles and bush-like members, so that in the latter case, the bush-like members are joined with a coaxially aligned node member.

Likewise, the grounding piles may be connected to at least one adjacently disposed node member by means of tension wires. Of course, the node member comprises appropriate fixing means for engaging with the tension wire.

Concerning the principle assembly of the inventive foundation structure it is possible, that at least one second profile is connected to a first profile and/or a bush-like member and/or a node member. Hence, essentially all axially extending members of the foundation structure may serve as node points since they may be connected with second profiles which generally extend in a certain angle relative to the axially aligned first profiles. Thus, a high degree of flexibility concerning the constructive design of the inventive foundation structure is given.

The grounding piles are preferably made of concrete, particularly reinforced concrete, and/or of a metal, particularly steel. The first and second profiles and bush-like members are preferably made of concrete, particularly reinforced concrete, and/or of a metal, particularly steel, or any combination thereof. Basically, it has to be assured, that all parts of the inventive foundation structure including the grounding piles are made of materials which are adapted to be used under the corrosive atmosphere of the sea. Hence, in addition or alternatively to the materials named before, all other materials which fulfil this pre-requisite are applicable.

Aside, the invention relates to a method for establishing a foundation structure for an offshore construction as described before, in particular an offshore wind turbine comprising the steps of: placing at least one bush-like member on the ground so that a free ending of the bush-like member axially extends off the ground, at least partially inserting a grounding pile into the bush-like member, forcing the grounding pile into the ground and erecting the foundation structure by connecting a first profile and/or a node member to the bush-like member in coaxial alignment.

The inventive method provides a simple and effective way to erect a foundation structure on the ground or seabed respectively, whereby the basic principle emanates from a coaxial alignment of the bush-like members and the first profiles of the foundation structure. Hence, the foundation structure is arranged directly on top of the bush-like member(s), that is the bush-like member(s) may be considered as a part of the constructive design of the foundation structure providing a firm fixation of the foundation structure to the ground on the one hand while on the other hand representing a corner stone for the further erection of the foundation structure which coaxially couples to the bush-like member(s) by means of a respective first profile and/or node member. It is understood, that in dependence of the number and alignment of the bush-like members different foundation structures such as monopile-, tripile-foundation, etc. may be realised.

In a subsequent step, that is after connecting the first profile and/or the node member to the bush-like member(s), further first and/or second profiles and/or node members may be separately connected to the respective first and/or second profile and/or node member connected to the bush-like member by means of tension wires and/welding and/or grouting. This allows a modular construction of the foundation structure by the essential elements, that is first and second profiles and node members are attached step by step so that the foundation structure continuously approaches towards the water surface. In such a manner, a huge degree of constructive flexibility regarding the assembly of the foundation structure is possible. It is understood, that other connecting principles than the use of tension wires, welding or grouting are applicable as well as long as they provide a firm and stable connection of the respective parts of the foundation structure with each other.

Alternatively, a pre-installed structure comprising a number of first and/or second profiles and/or node members may be connected to the respective first profile and/or node member connected to the bush-like member by means of tension wires and/or welding and/or grouting after connecting the first profile and/or the node member to the bush-like member. This inventive embodiment allows a comparatively fast way to erect a respective foundation structure due to the pre-installed structure, whereby the process of establishing the foundation structure is finished, when the pre-installed structure has been connected to the respective first profile and/or node member connected to the bush-like member. Likewise, other connecting principles than tension wires, welding or grouting are applicable in some cases.

It is further possible, that after forcing the grounding pile into the ground, the part of the grounding pile axially projecting off the bush-like member may be removed. In such a manner, the length off the grounding pile may be reduced to a minimum required level, which still provides a firm connection of the grounding pile and further the entire foundation structure to the ground. Thereby, the further connection of first and/or second profiles may be eased, especially in cases of first profiles and/or node members comprising a massive structure.

It is of advantage, when after forcing the grounding pile to the ground the grounding piles are being grouted within the bush-like member(s). Grouting provides a safe and firm fixation of the grounding piles within the bush-like member(s), which leads to a stable arrangement of the foundation structure as a whole.

In the following the invention is described in detail as reference is made to the figures, whereby:
- Fig. 1: shows a cut-out view of an inventive foundation structure according to a first exemplary embodiment of the invention;
- Fig. 2: shows a cut-out view of an inventive foundation structure according to a second exemplary embodiment of the invention;
- Fig. 3: shows a cut-out view of an inventive foundation structure according to a third exemplary embodiment of the invention; and
- Fig. 4: and
- Fig. 5: show the essential steps of the inventive method for establishing a foundation structure according to a first exemplary embodiment of the invention.

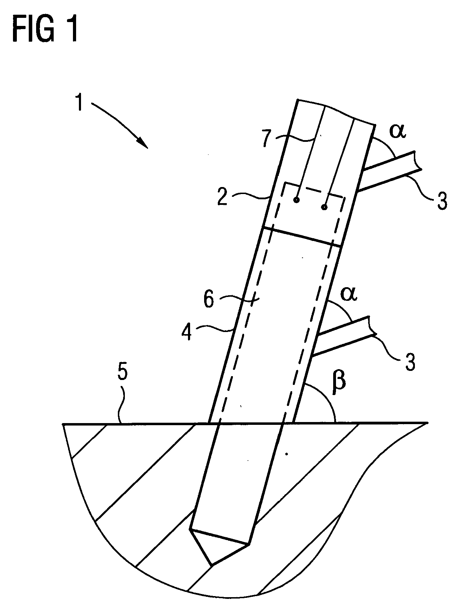

Fig. 1 shows a representative cut-out view of an inventive foundation structure 1 according to a first exemplary embodiment of the invention. The foundation structure 1 is built as a jacket structure for instance and serves as a proper foundation for an offshore wind turbine to be installed on the sea. The foundation structure 1 comprises a number of first profiles 2 comprising rods in axial alignment, second profiles 3 comprising rods in an angled alignment (cf. angle α) relative to the first profiles 2 and a number of grounding profiles comprising bush-like members 4. As is discernible, the bush-like members 4 are coaxially aligned with the first profiles 2. Due to the coaxial alignment, the bush-like member 4 may be deemed as a direct part of the foundation structure 1. Second profiles 3 may also be coupled to the bush-like member 4.

In order to fix the foundation structure 1 to the ground 5 that is the seabed, grounding piles 6 are forced through the hollow bush-like members 4 into the ground 5, that is the grounding piles 6 penetrate through the bush-like members 4 into the ground 5. After the grounding piles 6 have been forced into the ground 5, the grounding piles 6 are grouted within the bush-like members 4 by means of concrete. Hence, a permanent fixation or anchoring of the foundation structure 1 on the ground 5 is established.

The inventive embodiment according to fig. 1 also shows a novel connecting principle for connecting the grounding pile 6 with a first profile 2 of the foundation structure 1 by means of tension wires 7, whereby one end of the respective tension wires 7 is anchored to the free axial end of the grounding pile 6 and the opposite end of the tension wires 7 is anchored to an adjacently disposed first profile 2. Respective connecting portions for anchoring the tension wires 7 are provided with the grounding pile 6 and the respective first profile 2. The tension wires 7 may also extend through a number of adjacently axially disposed first profiles 2, so that the tension wires 7 may provide an axial connection of a number of first profiles 2.

The foundation structure 1 is disposed with a slight angle β to the ground 5 but may be deemed as essentially vertical.

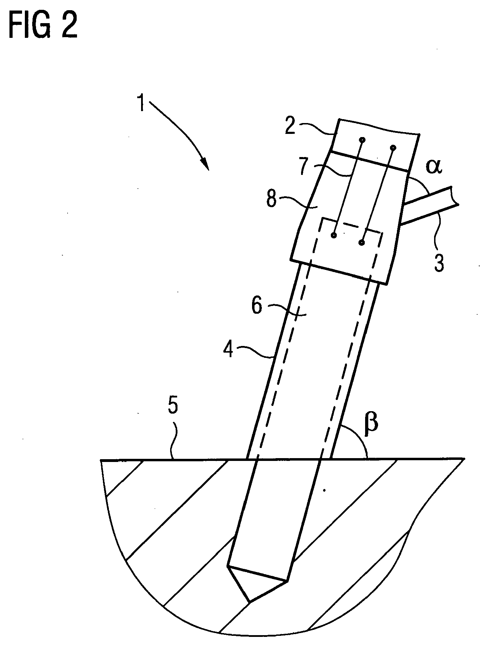

Fig. 2 shows a representative cut-out view of an inventive foundation structure 1 according to a second exemplary embodiment of the invention. The essential difference to the embodiment according to fig. 1 lies in the provision of node members 8 axially disposed downstream to the bush-like member 4 and upstream to a first profile 2. Further node members 8 may be arranged between further first profiles 2 of the foundation structure 1. The node members 8 mainly serve as a connecting site for second profiles 3 and therefore, comprise respective connecting portions to which one or more second profile 3 may couple. As depicted in fig. 1, the grounding pile 6 is likewise connected to the remainder of the foundation structure 1, that is particularly a successive first profile 2 by means of tension wires 7 axially extending through the node member 8.

According to the embodiments shown in fig. 1, 2 a foundation structure 1 may be constructed of the essential vertically oriented bush-like members 4, the grounding piles 6, coaxially disposed first profiles 2, interconnected node members 8 disposed in up- or downstream to the first profiles 2 and a number of second profiles 3 which may be coupled to the node members 8 or the first profiles 2 or the bush-like member 4 respectively.

With respect to fig. 2, the grounding piles 6 and the bush-like members 4 are made of reinforced concrete for instance, whereas the first and second profiles 2, 3 as well as the node members 8 may be cast iron parts.

A connection of the respective parts of the foundation structure 1 may additionally or alternatively be established by welding if the first profiles 2, second profiles 3, bush-like members 4 or node members 8 are made of a weldable material, particularly cast-iron. If the respective parts are made of concrete, particularly reinforced concrete, grouting is in favour.

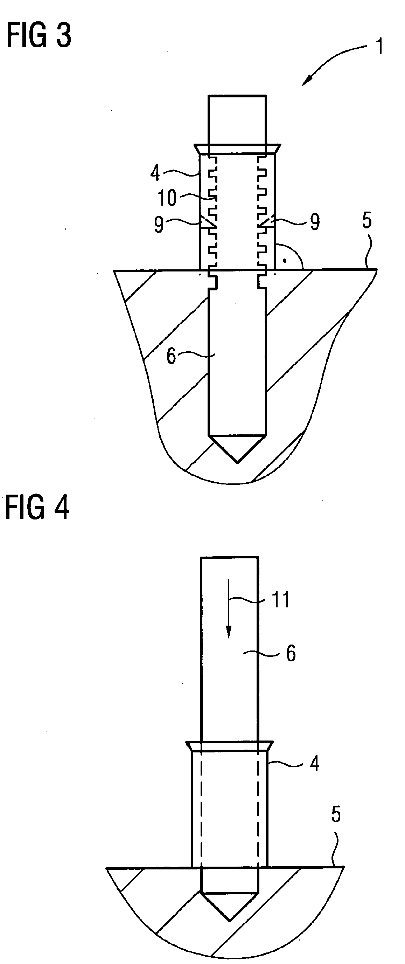

Fig. 3 shows a representative cut-out view of an inventive foundation structure 1 according to a third exemplary embodiment of the invention. In this embodiment, the inner diameter of the bush-like member 4 is provided with an axially extending connecting portion in the shape of radially inwardly extending inclinations in terms of snap-fits 9. Hence, a snap-fit connection of the bush-like member 4 and the grounding pile 6 may be attained since the outer diameter of the grounding pile 6 is accordingly provided with corresponding corrugated portions or recesses 10. It is understood, that the arrangement could also be inverse, that is the bush-like member 4 might be provided with respective recesses 10 and the grounding pile 6 might be provided with respective snap-fits 9 along their axial lengths. Likewise, the space between the bush-like member 4 and the grounding pile 6 caused by differences in the respective inner and outer diameters may be filled with grout after the grounding piles 6 have been properly forced into the ground 5. As is further discernible from fig. 3, the bush-like member 4 is vertically disposed on the ground 5, that is the grounding pile 6 vertically penetrates into the ground 5.

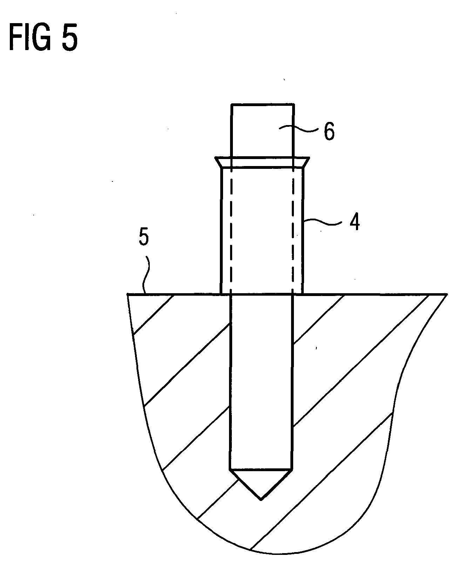

The inventive method for establishing a foundation structure for an offshore construction such as a wind turbine is explained with the help of fig. 4, 5. In fig. 4 a bush-like member 4 has been properly placed essentially vertically positioned on the ground 5, so that a free ending of the bush-like member 4 axially extends off the ground 5. A grounding pile 2 has been inserted within the hollow of the bush-like member 4 and is further forced into the ground 5 in the direction of arrow 11. After the grounding pile 6 has been properly forced into the ground 5, first profiles 2 (not shown) and/or node members 8 (not shown) are coaxially connected on top of the bush-like member 4, that is the bush-like member 4 represents a direct part of the foundation structure 1.

The erection of the foundation structure 1 on top of the bush-like member 4 may be executed in two ways, one alternative comprises separately connecting further first and/or second profiles 2, 3 and/or node members 8 to the respective first profile 2 and/or node member 8 already connected to the bush-like member 4 after connecting the first profile 2 and/or the node member 8 to the bush-like member 4. Thereby, the connection may be established by means of tension wires 7 and/or welding and/or grouting in dependence of the used materials. A second alternative comprises connecting a pre-installed structure (not shown) comprising a number of first and/or second profiles 2, 3 and/or node members 8 to the respective first profile 2 and/or node member 8 already connected to the bush-like member 4 after connecting the first profile 2 and/or the node member 8 to the bush-like member 4,. Likewise, the connection may be established by means of tension wires 7 and/or welding and/or grouting.

The inventive method is advantageous since it does not require a number of pre-installed grounding piles 6 forced into the ground 5 as an initial step, that is precisely positioning a number of grounding piles 6 in the ground 5, thereby ensuring that the distance between the grounding piles 6 fit to the distance between the first profiles 2 of the further foundation structure 1, as is known from prior art. According to the invention, the foundation structure 1 is placed on the ground 5 by means of the bush-like members 4 and subsequently, the grounding piles 6 are forced through the bush-like members 4, which guarantees that the grounding piles 6 and the bush-like members 4 are coaxially and correctly positioned in relation to each other.

It is further possible, to remove the part of the grounding pile 6 axially protecting off the bush-like member 4 (cf. fig. 5) after forcing the grounding pile 6 into the ground 5. Likewise, it is possible to grout the grounding piles 6 within the bush-like members 4 after the grounding piles 6 have been forced into the ground 5 in order to establish a firm connection of the bush-like members 4 and the grounding piles 6.

## Claims

1. Foundation structure (1) for offshore constructions, in particular foundation structure (1) for offshore wind turbines, comprising a number of first, second and grounding profiles (4), whereby the first profiles (2) comprise rods in axial alignment, the second profiles (3) comprise rods in an angled alignment relative to the first profiles (2) and the grounding profiles comprise bush-like members (4) contacting the ground (5) with one axial end, whereby the foundation structure (1) is fixed to the ground (5) by means of grounding piles (6) penetrating through the bush-like members (4) into the ground (5), wherein the bush-like members (4) are coaxially aligned with the first profiles (2).

2. Foundation structure (1) according to claim 1, wherein the inner diameter of the bush-like members (4) is at least partially provided with an axially extending connecting portion and the outer diameter of the grounding piles (6) is at least partially provided with a corresponding connecting portion.

3. Foundation structure (1) according to claim 2, wherein the connecting portions provide a snap-fit connection.

4. Foundation structure (1) according to claim 2 or 3, wherein the connecting portion is either formed as a snap-fit (9) or a corresponding recess (10).

5. Foundation structure (1) according to one of the preceding claims, wherein the grounding piles (6) are grouted within the bush-like members (4).

6. Foundation structure (1) according to one of the preceding claims, wherein the grounding piles (6) are connected to at least one adjacently disposed first profile (2) by means of tension wires (7).

7. Foundation structure (1) according to one of the preceding claims, further comprising at least one node member (8), wherein the node member (8) is disposed between adjacently disposed first profiles (2) or between adjacently disposed first profiles (2) and bush-like members (4).

8. Foundation structure (1) according to one claim 7, wherein the grounding piles (6) are connected to at least one adjacently disposed node member (8) by means of tension wires (7).

9. Foundation structure (1) according to claim 7 or 8, wherein at least one second profile (3) is connected to a first profile (2) and/or a bush-like member (4) and/or a node member (8).

10. Foundation structure (1) according to one of the preceding claims, wherein the grounding piles (6) are made of concrete, particularly reinforced concrete, and/or of a metal, particularly steel, and the first profiles (2), second profiles (3) and bush-like members (4) are made of concrete, particularly reinforced concrete, and/or of a metal, particularly steel, or any combination thereof.

11. Method for establishing a foundation structure (1) for an offshore construction according to one of the preceding claims, in particular an offshore wind-turbine comprising the steps of:
- placing at least one bush-like member (4) on the ground (5), so that a free ending of the bush-like member (4) axially extends off the ground (5),
- at least partially inserting a grounding pile (6) into the bush-like member (4),
- forcing the grounding pile (6) into the ground (5), and
- erecting the foundation structure (1) by connecting a first profile (2) and/or a node member (8) to the bush-like member (4) in coaxial alignment.

12. Method according to claim 11, wherein after connecting the first profile (2) and/or the node member (8) to the bush-like member (4), separately connecting further first and/or second members and/or node members (8) to the respective first profile (2) and/or node member (8) connected to the bush-like member (4) by means of tension wires (7) and/or welding and/or grouting.

13. Method according to claim 11, wherein after connecting the first profile (2) and/or the node member (8) to the bush-like member (4), connecting a pre-installed structure comprising a number of first (2) and/or second profiles (3) and/or node members (8) to the respective first profile (2) and/or node member (8) connected to the bush-like member (4) by means of tension wires (7) and/or welding and/or grouting.

14. Method according to one of the claims 11 to 13, wherein after forcing the grounding pile (6) into the ground (5), removing the part of the grounding pile (6) axially projecting off the bush-like member (4).

15. Method according to one of the claims 11 to 14, wherein after forcing the grounding pile (6) into the ground, grouting the grounding piles (6) within the bush-like member (4).

## Patentansprüche

1. Fundamentkonstruktion (1) für Offshore-Bauten, insbesondere Fundamentkonstruktion (1) für Offshore-Windenergieanlagen, mit einer Anzahl erster Profile, zweiter Profile und Grundprofile (4), wobei die ersten Profile (2) axial ausgerichtete Streben, die zweiten Profile (3) in einem Winkel zu den ersten Profilen (2) ausgerichtete Streben und die Grundprofile buchsenartige Elemente (4) umfassen, die mit einem axialen Ende mit dem Grund (5) in Kontakt sind, wobei die Fundamentkonstruktion (1) mit Hilfe von Grundpfeilern (6) am Grund (5) befestigt ist, die durch die buchsenartigen Elemente (4) hindurch in den Grund (5) verlaufen, wobei die buchsenartigen Elemente (4) koaxial zu den ersten Profilen (2) ausgerichtet sind.

2. Fundamentkonstruktion (1) nach Anspruch 1, bei der der Innendurchmesser der buchsenartigen Elemente (4) zumindest teilweise mit einem axial verlaufenden Verbindungsabschnitt und der Außendurchmesser der Grundpfeiler (6) zumindest teilweise mit einem entsprechenden Verbindungsabschnitt versehen ist.

3. Fundamentkonstruktion (1) nach Anspruch 2, bei der die Verbindungsabschnitte eine Schnappverbindung bereitstellen.

4. Fundamentkonstruktion (1) nach Anspruch 2 oder 3, bei der der Verbindungsabschnitt entweder als Schnappverschluss (9) oder als entsprechende Ausnehmung (10) ausgebildet ist.

5. Fundamentkonstruktion (1) nach einem der vorhergehenden Ansprüche, bei der die Grundpfeiler (6) in den buchsenartigen Elementen (4) vergossen sind.

6. Fundamentkonstruktion (1) nach einem der vorhergehenden Ansprüche, bei der die Grundpfeiler (6) mit Hilfe von Spanndrähten (7) mit mindestens einem daneben angeordneten ersten Profil (2) verbunden sind.

7. Fundamentkonstruktion (1) nach einem der vorhergehenden Ansprüche, die ferner mindestens ein Knotenelement (8) umfasst, wobei das Knotenelement (8) zwischen nebeneinander angeordneten ersten Profilen (2) oder zwischen nebeneinander angeordneten ersten Profilen (2) und buchsenartigen Elementen (4) angeordnet ist.

8. Fundamentkonstruktion (1) nach Anspruch 7, bei der die Grundpfeiler (6) mit Hilfe von Spanndrähten (7) mit mindestens einem daneben angeordneten Knotenelement (8) verbunden sind.

9. Fundamentkonstruktion (1) nach Anspruch 7 oder 8, bei der mindestens ein zweites Profil (3) mit einem ersten Profil (2) und/oder einem buchsenartigen Element (4) und/oder einem Knotenelement (8) verbunden ist.

10. Fundamentkonstruktion (1) nach einem der vorhergehenden Ansprüche, bei der die Grundpfeiler (6) aus Beton, insbesondere Stahlbeton, und/oder aus einem Metall, insbesondere Stahl, und die ersten Profile (2), die zweiten Profile (3) und die buchsenartigen Elemente (4) aus Beton, insbesondere Stahlbeton, und/oder aus einem Metall, insbesondere Stahl, oder einer beliebigen Kombination daraus hergestellt sind.

11. Verfahren zum Errichten einer Fundamentkonstruktion (1) für einen Offshore-Bau nach einem der vorhergehenden Ansprüche, insbesondere eine Offshore-Windenergieanlage, mit folgenden Schritten:
- Platzieren mindestens eines buchsenartigen Elements (4) am Grund (5), so dass ein freies Ende des buchsenartigen Elements (4) axial vom Grund (5) aus verläuft,
- zumindest teilweises Einführen eines Grundpfeilers (6) in das buchsenartige Element (4),
- Treiben des Grundpfeilers (6) in den Grund (5) und
- Bauen der Fundamentkonstruktion (1) durch Verbinden eines ersten Profils (2) und/oder eines Knotenelements (8) mit dem buchsenartigen Element (4) in koaxialer Ausrichtung.

12. Verfahren nach Anspruch 11, bei dem nach dem Verbinden des ersten Profils (2) und/oder des Knotenelements (8) mit dem buchsenartigen Element (4) über Spanndrähte (7) und/oder durch Schweißen und/oder Vergießen separat weitere erste und/oder zweite Elemente und/oder Knotenelemente (8) mit dem jeweiligen ersten Profil (2) und/oder dem mit dem buchsenartigen Element (4) verbundenen Knotenelement (8) verbunden werden.

13. Verfahren nach Anspruch 11, bei dem nach dem Verbinden des ersten Profils (2) und/oder des Knotenelements (8) mit dem buchsenartigen Element (4) über Spanndrähte (7) und/oder durch Schweißen und/oder Vergießen eine vorinstallierte Konstruktion, die eine Anzahl erste (2) und/oder zweite Profile (3) und/oder Knotenelemente (8) umfasst, mit dem jeweiligen ersten Profil (2) und/oder dem mit dem buchsenartigen Element (4) verbundenen Knotenelement (8) verbunden wird.

14. Verfahren nach einem der Ansprüche 11 bis 13, bei dem nach dem Treiben des Grundpfeilers (6) in den Grund (5) der Teil des Grundpfeilers (6) entfernt wird, der axial aus dem buchsenartigen Element (4) ragt.

15. Verfahren nach einem der Ansprüche 11 bis 14, bei dem nach dem Treiben des Grundpfeilers (6) in den Grund die Grundpfeiler (6) in dem buchsenartigen Element (4) vergossen werden.

## Revendications

1. Structure de fondations (1) pour des constructions en mer, en particulier une structure de fondations (1) pour des éoliennes en mer, comprenant un certain nombre de premiers et de deuxièmes profilés et de profilés d'ancrage (4), dans laquelle les premiers profilés (2) comprennent des tiges en alignement axial, les deuxièmes profilés (3) comprennent des tiges dans un alignement formant un angle par rapport aux premiers profilés (2) et les profilés d'ancrage comprennent des éléments (4) de type chemise au contact du fond marin (5) avec une extrémité axiale, dans laquelle la structure de fondations (1) est fixée sur le fond marin (5) au moyen de piliers d'ancrage (6) pénétrant à travers les éléments (4) de type chemise jusque dans le fond marin (5), dans laquelle les éléments (4) de type chemise sont coaxialement alignés avec les premiers profilés (2).

2. Structure de fondations (1) selon la revendication 1, dans laquelle le diamètre intérieur des éléments (4) de type chemise est au moins partiellement prévu avec une partie de connexion s'étendant axialement et le diamètre extérieur des piliers d'ancrage (6) est au moins partiellement prévu avec une partie de connexion correspondante.

3. Structure de fondations (1) selon la revendication 2, dans laquelle les parties de connexion offrent une connexion par encliquetage.

4. Structure de fondations (1) selon la revendication 2 ou 3, dans laquelle la partie de connexion est formée soit comme un encliquetage (9), soit comme un évidement (10) correspondant.

5. Structure de fondations (1) selon l'une des revendications précédentes, dans laquelle les piliers d'ancrage (6) sont scellés au mortier à l'intérieur des éléments (4) de type chemise.

6. Structure de fondations (1) selon l'une des revendications précédentes, dans laquelle les piliers d'ancrage (6) sont connectés à au moins un premier profilé (2) disposé de façon adjacente au moyen de câbles de tension (7).

7. Structure de fondations (1) selon l'une des revendications précédentes, comprenant en outre au moins un élément (8) de noeud, dans laquelle l'élément (8) de noeud est disposé entre des premiers profilés (2) disposés de façon adjacente ou entre des premiers profilés (2) disposés de façon adjacente et des éléments (4) de type chemise.

8. Structure de fondations (1) selon la revendication 7, dans laquelle les piliers d'ancrage (6) sont connectés à au moins un élément (8) de noeud disposé de façon adjacente au moyen de câbles de tension (7).

9. Structure de fondations (1) selon la revendication 7 ou 8, dans laquelle au moins un deuxième profilé (3) est connecté à un premier profilé (2) et/ou un élément (4) de type chemise et/ou un élément (8) de noeud.

10. Structure de fondations (1) selon l'une des revendications précédentes, dans laquelle les piliers d'ancrage (6) sont constitués de béton, particulièrement de béton armé, et/ou d'un métal, particulièrement un acier, et les premiers profilés (2), les deuxièmes profilés (3) et les éléments (4) de type chemise sont constitués de béton, particulièrement de béton armé, et/ou d'un métal, particulièrement un acier, ou d'une quelconque combinaison de ceux-ci.

11. Procédé d'établissement d'une structure de fondations (1) pour une construction en mer selon l'une des revendications précédentes, en particulier une éolienne en mer, comprenant les étapes de :
- mise en place d'au moins un élément (4) de type chemise sur le fond marin (5), de telle sorte qu'une extrémité libre de l'élément (4) de type chemise s'étend axialement depuis le fond marin (5),
- insertion au moins partielle d'un pilier d'ancrage (6) dans l'élément (4) de type chemise,
- forçage du pilier d'ancrage (6) dans le fond marin (5), et
- érection de la structure de fondations (1) en connectant un premier profilé (2) et/ou un élément (8) de noeud à l'élément (4) de type chemise en alignement coaxial.

12. Procédé selon la revendication 11, dans lequel, après connexion du premier profilé (2) et/ou de l'élément (8) de noeud à l'élément (4) de type chemise, connexion, séparément, d'autres premiers et/ou deuxièmes éléments et/ou éléments (8) de noeud au premier profilé (2) et/ou à l'élément (8) de noeud connecté(s) à l'élément (4) de type chemise, respectivement, au moyen de câbles de tension (7) et/ou d'un soudage et/ou d'un scellement au mortier.

13. Procédé selon la revendication 11, dans lequel, après connexion du premier profilé (2) et/ou de l'élément (8) de noeud à l'élément (4) de type chemise, connexion d'une structure préinstallée comprenant un certain nombre de premiers (2) et/ou de deuxièmes (3) profilés et/ou d'éléments (8) de noeud au premier profilé (2) et/ou à l'élément (8) de noeud connecté(s) à l'élément (4) de type chemise, respectivement, au moyen de câbles de tension (7) et/ou d'un soudage et/ou d'un scellement au mortier.

14. Procédé selon l'une des revendications 11 à 13, dans lequel, après forçage du pilier d'ancrage (6) dans le fond marin (5), dépose de la partie du pilier d'ancrage (6) se projetant axialement depuis l'élément (4) de type chemise.

15. Procédé selon l'une des revendications 11 à 14, dans lequel, après forçage du pilier d'ancrage (6) dans le fond marin (5), scellement au mortier liquide des piliers d'ancrage (6) à l'intérieur de l'élément (4) de type chemise.
